# EUROPEAN PATENT SPECIFICATION

(11) **EP 3 039 340 B1**
(45) Date of publication and mention of the grant of the patent: **28.11.2018**
(21) Application number: 14848461.1
(22) Date of filing: 30.06.2014
(51) Int. Cl.: F23M 5/08, F23R 3/42, F02C 7/18, F23R 3/04

(54) **VENA CONTRACTA SWIRLING DILUTION PASSAGES FOR GAS TURBINE ENGINE COMBUSTOR**
VENA-CONTRACTA-VERWIRBELUNGS-VERDÜNNUNGSPASSAGEN FÜR EINE GASTURBINENMOTOR-BRENNKAMMER
PASSAGES DE DILUTION À TOURBILLONNEMENT À SECTION CONTRACTÉE POUR CHAMBRE DE COMBUSTION DE MOTEUR À TURBINE À GAZ

(30) Priority: 30.08.2013 US 201361872410 P; 18.11.2013 US 201361905601 P
(43) Date of publication of application: 06.07.2016
(73) Proprietor: United Technologies Corporation, Farmington, CT 06032 (US)
(72) Inventor: DRAKE, Christopher, West Hartford, Connecticut 06107 (US); CUNHA, Frank J., Avon, Connecticut 06001 (US); KOSTKA, JR. Stanislav, Middletown, Connecticut 06457 (US); JAUSE, Jonathan M., Vernon, Connecticut 06066 (US); HANSON, Russell B., Jupiter, Florida 33478 (US)
(74) Representative: Dehns
(86) International application number: PCT/US2014/044873
(87) International publication number: WO 2015/047509

(56) References cited:
- EP-A2- 2 226 562
- EP-A2- 2 236 930
- FR-A1- 2 826 102
- US-A- 3 981 142
- US-A- 4 132 066
- US-A- 5 187 937
- US-A1- 2003 046 934
- US-A1- 2003 046 934
- US-A1- 2010 024 427
- US-A1- 2010 122 537

## Description

### BACKGROUND

The present disclosure relates to a gas turbine engine and, more particularly, to a combustor section therefor.

Gas turbine engines, such as those that power modern commercial and military aircraft, generally include a compressor section to pressurize an airflow, a combustor section to burn a hydrocarbon fuel in the presence of the pressurized air, and a turbine section to extract energy from the resultant combustion gases.

The combustor section typically includes an outer shell lined with heat shields often referred to as floatwall panels which are attached to the outer shell with studs and nuts. In certain arrangements, dilution holes in the floatwall panel communicate with respective dilution holes in the outer shell to direct cooling air for dilution of the combustion gases. In addition to the dilution holes, the outer shell may also have relatively smaller air impingement holes to direct cooling air between the floatwall panels and the outer shell to cool the cold side of the floatwall panels. This cooling air exits effusion holes on the surface of the floatwall panels to form a film on a hot side of the floatwall panels which serves as a barrier against thermal damage.

One particular region where localized hot spots may arise is around the combustor dilution holes. The dilution holes inject relative lower temperature air into the swirling fuel-rich cross flow for combustion. As the air penetrates into the fuel-rich cross-stream, heat release takes place along the reaction front creating high temperature regions around the dilution holes. A stagnation region along the upstream side of the dilution jets also forms a higher pressure environment such that cross flow momentum deflects the incoming dilution jet. It is the combination of high pressure and the deflection of the incoming jet which is believed to create a high temperature recirculation region along the inner surface of the dilution hole.

A lower velocity region of flow along the perimeter of the dilution hole may be highly susceptible to inflow of hot combustion gas products. The inflow of these products can occur within a localized ingestion region and may result in a durability concern because high temperature gases replace a low temperature boundary condition. EP 2236930 A2 is an arrangement deemed to disclose features of the preamble of claim 1. Other prior art includes US 2003/046934 A1, EP 222656 A2, US 4132066 A, and FR 2826102 A1.

### SUMMARY

A wall assembly for use in a combustor of a gas turbine engine is provided according to a disclosed non-limiting embodiment of the present disclosure as claimed in claim 1.

In a further embodiment of any of the foregoing embodiments of the present disclosure, the first inner periphery and the second inner periphery each has an oval cross-section.

In a further embodiment of any of the foregoing embodiments of the present disclosure, the first inner periphery and/or the second inner periphery has a circular cross-section.

In a further embodiment of any of the foregoing embodiments of the present disclosure, the spiral flow guide extends from the second inner periphery.

In a further embodiment of any of the foregoing embodiments of the present disclosure, the spiral flow guide extends from the second inner periphery and at least partially around the axis.

A method of reducing recirculation into a dilution passage in a combustor liner panel of a gas turbine engine is provided according to another disclosed non-limiting embodiment of the present disclosure is claimed in claim 6.

In a further embodiment of any of the foregoing embodiments of the present disclosure, the method includes swirling the dilution air jet to hug an inner wall of the dilution passage.

The foregoing features and elements may be combined in various combinations without exclusivity, unless expressly indicated otherwise. These features and elements as well as the operation thereof will become more apparent in light of the following description and the accompanying drawings. It should be understood, however, the following description and drawings are intended to be exemplary in nature and non-limiting.

### BRIEF DESCRIPTION OF THE DRAWINGS

Various features will become apparent to those skilled in the art from the following detailed description of the disclosed non-limiting embodiment. The drawings that accompany the detailed description can be briefly described as follows:
FIG. 1 is a schematic cross-section of an example gas turbine engine architecture;
FIG. 2 is a schematic cross-section of another example gas turbine engine architecture;
FIG. 3 is an expanded longitudinal schematic sectional view of a combustor section according to one non-limiting embodiment that may be used with the example gas turbine engine architectures shown in FIGS. 1 and 2;
FIG. 4 is an exploded view of a wall assembly with a dilution passage;
FIG. 5 is a sectional view of a prior art dilution passage;
FIG. 6 is a sectional view of a dilution passage according to another disclosed non-limiting embodiment;
FIG. 7 is a sectional view of a dilution passage according to another disclosed non-limiting embodiment;
FIG. 8 is an exploded view of a wall assembly with a dilution passage according to another disclosed non-limiting embodiment;
FIG. 9 is a sectional view of a prior art dilution passage schematically illustrating the vena contracta of fluid flowing therethrough; and
FIG. 10 is an exploded view of a wall assembly with a dilution passage according to another disclosed non-limiting embodiment.

### DETAILED DESCRIPTION

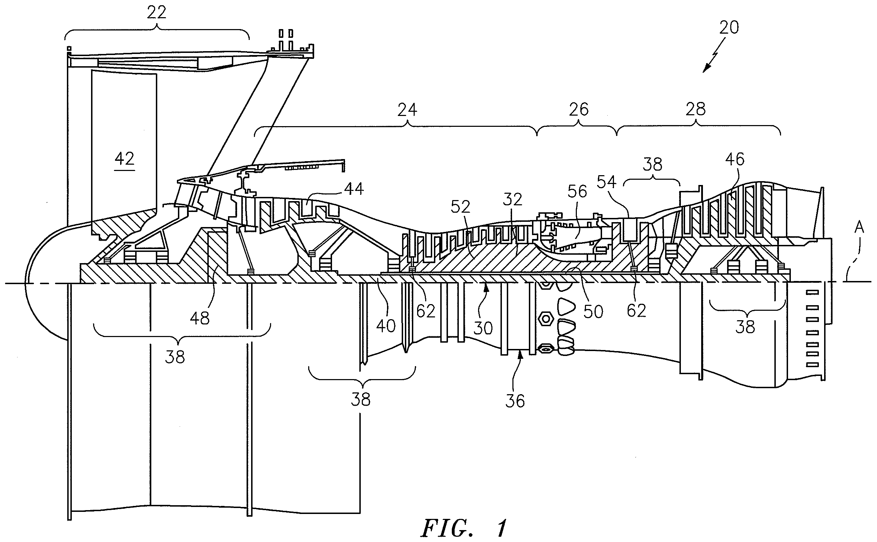

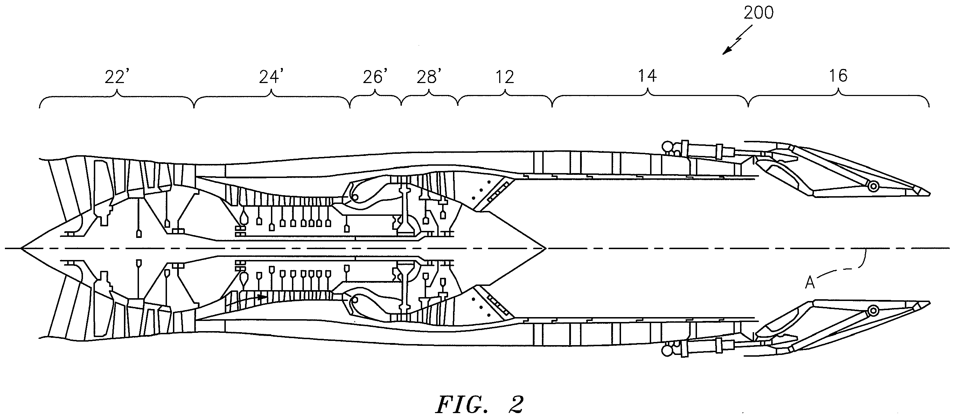

FIG. 1 schematically illustrates a gas turbine engine 20. The gas turbine engine 20 is disclosed herein as a two-spool turbo fan that generally incorporates a fan section 22, a compressor section 24, a combustor section 26 and a turbine section 28. Referring to FIG. 2, alternative engine architectures 200 might include an augmentor section 12, an exhaust duct section 14 and a nozzle section 16 in addition to the fan section 22', compressor section 24', combustor section 26' and turbine section 28' among other systems or features. Referring again to FIG. 1, the fan section 22 drives air along a bypass flowpath while the compressor section 24 drives air along a core flowpath for compression and communication into the combustor section 26 then expansion through the turbine section 28. Although depicted as a turbofan in the disclosed non-limiting embodiment, it should be understood that the concepts described herein are not limited to use with turbofans as the teachings may be applied to other types of turbine engines such as a turbojets, turboshafts, and three-spool (plus fan) turbofans wherein an intermediate spool includes an intermediate pressure compressor ("IPC") between a low pressure compressor ("LPC") and a high pressure compressor ("HPC"), and an intermediate pressure turbine ("IPT") between a high pressure turbine ("HPT") and a low pressure turbine ("LPT").

The engine 20 generally includes a low spool 30 and a high spool 32 mounted for rotation about an engine central longitudinal axis A relative to an engine static structure 36 via several bearing structures 38. The low spool 30 generally includes an inner shaft 40 that interconnects a fan 42, a low pressure compressor ("LPC") 44 and a low pressure turbine ("LPT") 46. The inner shaft 40 may drive the fan 42 directly or through a geared architecture 48 as illustrated in FIG. 1 to drive the fan 42 at a lower speed than the low spool 30. An exemplary reduction transmission is an epicyclic transmission, namely a planetary or star gear system.

The high spool 32 includes an outer shaft 50 that interconnects a high pressure compressor ("HPC") 52 and a high pressure turbine ("HPT") 54. A combustor 56 is arranged between the HPC 52 and the HPT 54. The inner shaft 40 and the outer shaft 50 are concentric and rotate about the engine central longitudinal axis A which is collinear with their longitudinal axes.

Core airflow is compressed by the LPC 44 then the HPC 52, mixed with the fuel and burned in the combustor 56, then expanded over the HPT 54 and the LPT 46. The LPT 46 and HPT 54 rotationally drive the respective low spool 30 and high spool 32 in response to the expansion. The main engine shafts 40, 50 are supported at a plurality of points by the bearing structures 38 within the static structure 36. It should be understood that various bearing structures 38 at various locations may alternatively or additionally be provided.

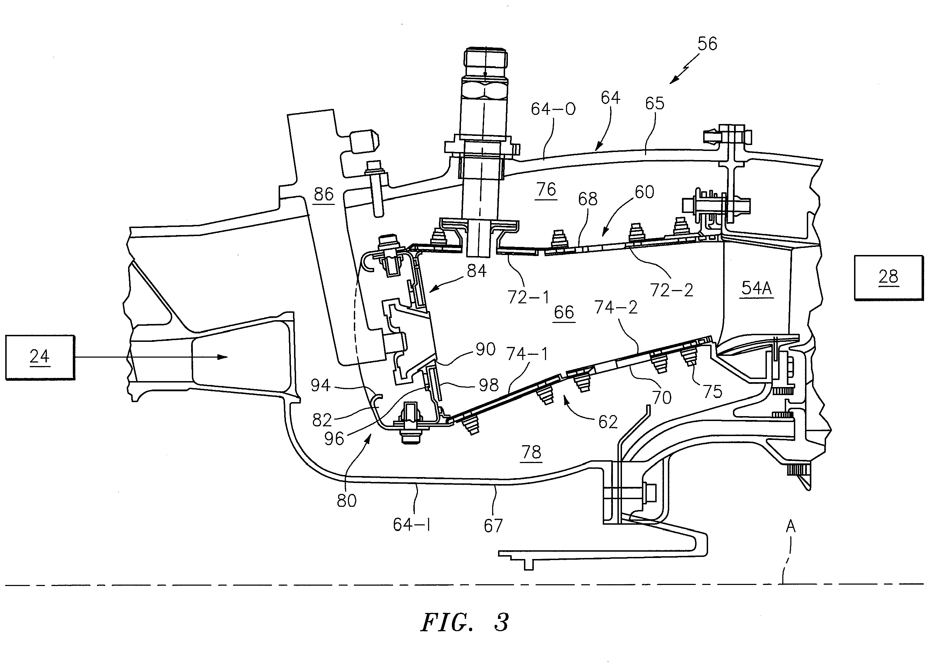

With reference to FIG. 3, the combustor section 26 generally includes a combustor 56 with an outer combustor wall assembly 60, an inner combustor wall assembly 62 and a diffuser case module 64 therearound. The outer combustor wall assembly 60 and the inner combustor wall assembly 62 are spaced apart such that an annular combustion chamber 66 is defined therebetween.

The outer combustor wall assembly 60 is spaced radially inward from an outer diffuser case 65 of the diffuser case module 64 to define an outer annular plenum 76. The inner combustor wall assembly 62 is spaced radially outward from an inner diffuser case 67 of the diffuser case module 64 to define an inner annular plenum 78. It should be understood that although a particular combustor is illustrated, other combustor types with various combustor liner arrangements will also benefit herefrom. It should be further understood that the disclosed cooling flow paths are but an illustrated embodiment and should not be limited only thereto.

The combustor wall assemblies 60, 62 contain the combustion products for direction toward the turbine section 28. Each combustor wall assembly 60, 62 generally includes a respective support shell 68, 70 which supports one or more liner panels 72, 74 mounted thereto. Each of the liner panels 72, 74 may be generally rectilinear and manufactured of, for example, a nickel based super alloy, ceramic or other temperature resistant material and are arranged to form a liner array. In the liner array, a multiple of forward liner panels 72A and a multiple of aft liner panels 72B are circumferentially staggered to line the outer shell 68. A multiple of forward liner panels 74A and a multiple of aft liner panels 74B are circumferentially staggered to also line the inner shell 70.

The combustor 56 further includes a forward assembly 80 immediately downstream of the compressor section 24 to receive compressed airflow therefrom. The forward assembly 80 generally includes an annular hood 82, a bulkhead assembly 84, and a multiple of swirlers 90 (one shown). Each of the swirlers 90 is circumferentially aligned with one of a multiple of fuel nozzles 86 (one shown) and the respective hood ports 94 to project through the bulkhead assembly 84. The bulkhead assembly 84 includes a bulkhead support shell 96 secured to the combustor walls 60, 62, and a multiple of circumferentially distributed bulkhead liner panels 98 secured to the bulkhead support shell 96 around each respective swirler opening 92. The bulkhead support shell 96 is generally annular and the multiple of circumferentially distributed bulkhead liner panels 98 are segmented, typically one to each fuel nozzle 86 and swirler 90.

The annular hood 82 extends radially between, and is secured to, the forwardmost ends of the combustor wall assemblies 60, 62. The annular hood 82 includes the multiple of circumferentially distributed hood ports 94 that receive one of the respective multiple of fuel nozzles 86 and facilitates the direction of compressed air into the forward end of the combustion chamber 66 through a swirler opening. Each fuel nozzle 86 may be secured to the diffuser case module 64 and project through one of the hood ports 94 into the respective swirler 90.

The forward assembly 80 introduces core combustion air into the forward section of the combustion chamber 66 while the remainder enters the outer annular plenum 76 and the inner annular plenum 78. The multiple of fuel nozzles 86 and adjacent structure generate a blended fuel-air mixture that supports stable combustion in the combustion chamber 66.

Opposite the forward assembly 80, the outer and the inner support shells 68, 70 are mounted adjacent to a first row of Nozzle Guide Vanes (NGVs) 54A in the HPT 54. The NGVs 54A are static engine components which direct core airflow combustion gases onto the turbine blades of the first turbine rotor in the turbine section 28 to facilitate the conversion of pressure energy into kinetic energy. The core airflow combustion gases are also accelerated by the NGVs 54A because of their convergent shape and are typically given a "spin" or a "swirl" in the direction of turbine rotor rotation. The turbine rotor blades absorb this energy to drive the turbine rotor at high speed.

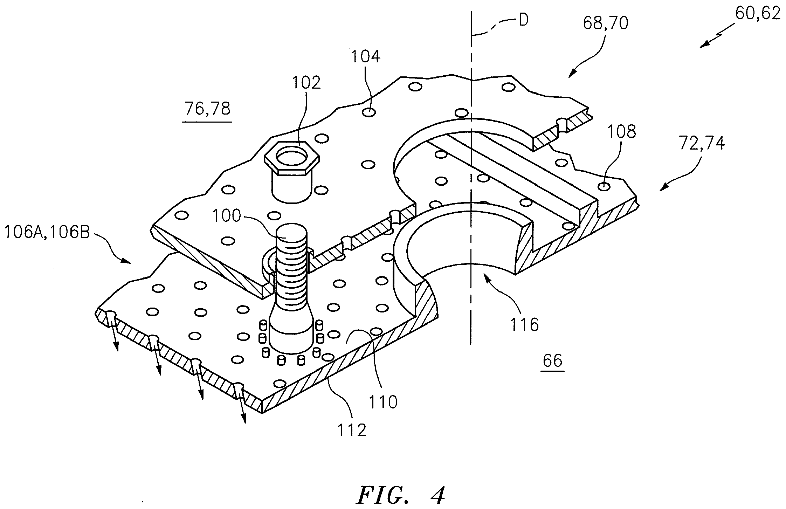

With reference to FIG. 4, a multiple of studs 100 extend from the liner panels 72, 74 so as to permit the liner panels 72, 74 to be mounted to their respective support shells 68, 70 with fasteners 102 such as nuts. That is, the studs 100 project rigidly from the liner panels 72, 74 and through the respective support shells 68, 70 to receive the fasteners 102 at a threaded distal end section thereof.

A multiple of cooling impingement passages 104 penetrate through the support shells 68, 70 to allow air from the respective annular plenums 76, 78 to enter cavities 106A, 106B formed in the combustor wall assemblies 60, 62 between the respective support shells 68, 70 and liner panels 72, 74. The cooling impingement passages 104 are generally normal to the surface of the liner panels 72, 74. The air in the cavities 106A, 106B provides cold side impingement cooling of the liner panels 72, 74. As used herein, the term impingement cooling generally implies heat removal from a part via an impinging gas jet directed at a part.

A multiple of effusion passages 108 penetrate through each of the liner panels 72, 74. The geometry of the passages (e.g., diameter, shape, density, surface angle, incidence angle, etc.) as well as the location of the passages with respect to the high temperature main flow also contributes to effusion film cooling. The combination of impingement passages 104 and effusion passages 108 may be referred to as an Impingement Film Floatwall (IFF) assembly.

The effusion passages 108 allow the air to pass from the cavities 106A, 106B defined in part by a cold side 110 of the liner panels 72, 74 to a hot side 112 of the liner panels 72, 74 and thereby facilitate the formation of thin, cool, insulating blanket or film of cooling air along the hot side 112. The effusion passages 108 are generally more numerous than the impingement passages 104 to promote the development of film cooling along the hot side 112 to sheath the liner panels 72, 74. Film cooling as defined herein is the introduction of a relatively cooler air at one or more discrete locations along a surface exposed to a high temperature environment to protect that surface in the region of the air injection as well as downstream thereof.

A multiple of dilution passages 116 may penetrate through both the respective support shells 68, 70 and liner panels 72, 74 along a common axis D. For example only, in a Rich-Quench-Lean (R-Q-L) type combustor, the dilution passages 116 are located downstream of the forward assembly 80 to quench the hot combustion gases within the combustion chamber 66 by direct supply of cooling air from the respective annular plenums 76, 78.

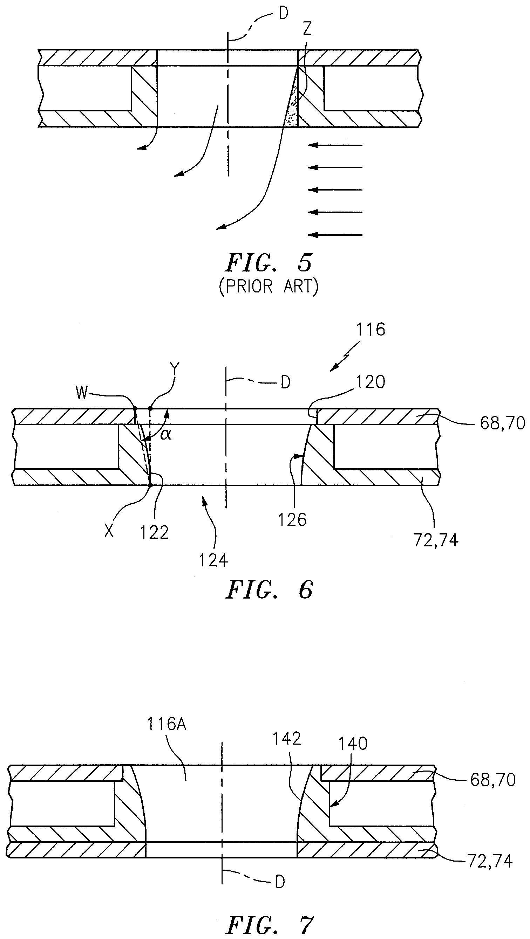

With reference to FIG. 5, conventional combustor design utilizes straight-walled dilution passages. The straight walled dilution holes may result in a lower velocity region of flow along the perimeter of the dilution hole which can be susceptible to inflow when the dilution air jet is deflected in a cross flow and a higher pressure region is created upstream of the dilution hole. The inflow of combustion products may thereby occur within the region of area Z. This localized ingestion of high temperature gases may provide a durability concern because a low temperature boundary condition possible through contact of the wall with the incoming jet flow is replaced by high temperature gases.

With reference to FIG. 6, at least one of the multiple of dilution passages 116 include a first internal periphery 120 defined by the support shells 68, 70 and a second internal periphery 122 defined by the associated liner panels 72, 74 along axis D. The inner peripheries 120, 122 form a contoured nozzle 124 that forms a local acceleration of the flow along the perimeter of the dilution passages 116 to minimize the likelihood of hot gas ingestion. That is, a contoured, converging wall surface of an inner wall 126 of the dilution passage 116 alters the incoming velocity profile of the dilution air jet to minimize hot gas ingestion and therefore improve the global durability of the combustor 56. The first internal periphery 120 and the second internal periphery 122 may be of various radial configurations such as circular or oval.

The second internal periphery 122 is smaller than that of the first internal periphery 120 such that the inner wall 126 defines a convex surface around axis D or funnel type shape. In one disclosed non-limiting embodiment, first internal periphery 120 defines a point W and the second internal periphery 122 defines a point X. A third point Y is defined with respect to point X axially parallel to axis D to form a triangle between points W, X, Y. Line WY and XY are perpendicular such that the contoured nozzle 124 may be generally defined by an angle α between line WY and WX of about twenty-five (25) degrees. It should be appreciated that this is but one example geometry for a contoured converging dilution passages 116 and that other geometries will also benefit herefrom.

By contouring the inner wall 126 of the dilution passage 116, the discharge coefficient is increased to facilitate a passage that generates similar flow to that of a relatively larger conventional straight wall passage (see FIG. 5). The resultant reduced area of the incoming dilution air jet forms a smaller stagnation area upstream of the dilution passages 116 to further improve durability. By contouring the inner periphery 120, 122 of the dilution passages 116, the discharge coefficient is also increased which allows for the use of a smaller diameter hole to generate identical flows. The resultant reduced area of the incoming dilution air jet will form a relatively smaller stagnation area upstream of the dilution passages 116.

As the dilution air jet directed through the contoured nozzle 124 does not deflect away from the inner surface when subjected to a cross or swirling flow, the hot recirculation zone is minimized if not eliminated. The reduction of hot spots adjacent to dilution passages 116 thereby permits utilization of the relatively limited cooling air elsewhere in the combustor allowing for the more efficient engine operation.

With reference to FIG. 7, in another disclosed non-limiting embodiment, the dilution passages 116A is defined by an annular grommet 140 mounted between the respective support shell 68, 70 and associated liner panels 72, 74 along axis D. The annular grommet 140 includes an internal periphery 142 that forms a contoured nozzle 124 as above described. The annular grommet 140 permits the respective support shell 68, 70 and associated liner panels 72, 74 to be manufactured as generally consistent flat panels as the annular grommet 140 separately defines the contoured nozzle 124.

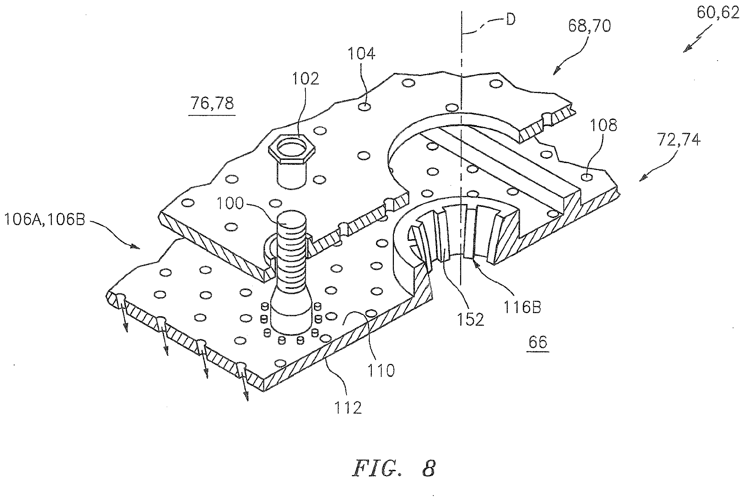

With reference to FIG. 8, in another disclosed non-limiting embodiment, the dilution passages 116B defines a convergent nozzle with flow guides 152. The flow guides 152 in one disclosed non-limiting embodiment are raised ridges that extend toward and are generally parallel to axis D. It should be appreciated that the flow guides 152 need not be parallel to axis D and may alternatively provide a swirl or counter-swirl as desired. Furthermore, the flow guides 152 may be of various non-rectilinear configurations such as triangular or other shapes.

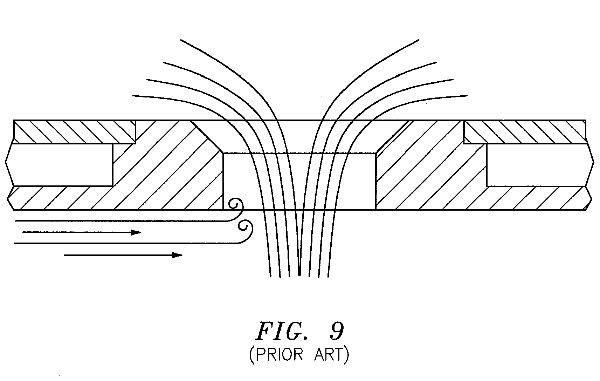

With reference to FIG. 9, one theory is that the dilution grommets create a natural vena contracta as the air passes through them. "Vena contracta" is the point in a fluid stream where the diameter of the stream is minimal, and the fluid velocity is at its maximum such that the maximum contraction takes place at a section slightly downstream of the orifice. This vena contracta may potentially allow air to recirculate and expose the passage interior to relatively continuous high temperatures. Another burn back theory is that the conventional straight wall dilution passage forms a natural vena contracta V as the air passes through therethrough. This vena contracta may allows for the air jet to at least partially recirculate (illustrated schematically at zone R) inside the dilution passage and thereby continuously expose the inner periphery of the straight wall dilution passage to high temperatures

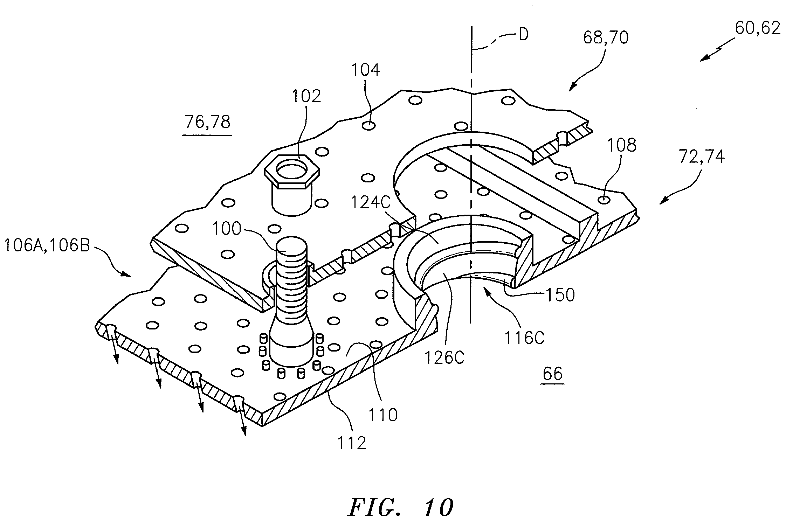

With reference to FIG. 10, in a disclosed non-limiting embodiment, at least one of the multiple of dilution passages 116C includes a contoured nozzle 124C that generally matches the natural vena contracta that the air experiences to minimize the likelihood of hot gas ingestion. In accordance with the invention, the contoured nozzle 124C further includes a spiral flow guide 150 along the internal periphery 122. The spiral flow guide 150 is a raised ridge that spirals around the axis D. It should be appreciated that the spiral flow guide 150 may alternatively provide a swirl and/or counter-swirl as desired. Furthermore, the spiral flow guide 150 may be of various profiles such as triangular or other shapes.

The contoured nozzle 124C allows the air to accelerate and produce the needed jet penetration for dilution to occur and the spiral flow guide 150 causes the air to hug the inner wall 126 to reduce separation. As the air jet exits the dilution passages 116C, the spiraled air jet will swirl outward slightly and thereby disrupt any recirculation zone inside of the dilution passages 116C. This reduces heat soaking that may otherwise occur on the hot side 112, and will minimize, if not eliminate, burn back.

The contoured nozzle 124 increases the discharge coefficient to facilitate a relatively smaller passage that generates similar flow to that of a relatively larger conventional straight wall passage. The discharge coefficient is also increased which allows a relatively smaller diameter passage to generate identical flows. As the dilution air jet directed through the contoured nozzle 124 does not deflect away from the inner surface when subjected to a cross or swirling flow, the hot recirculation zone is minimized if not eliminated. The reduction of hot spots adjacent to dilution passages 116 thereby permits utilization of the relatively limited cooling air elsewhere in the combustor allowing for the more efficient engine operation.

The use of the terms "a" and "an" and "the" and similar references in the context of description (especially in the context of the following claims) are to be construed to cover both the singular and the plural, unless otherwise indicated herein or specifically contradicted by context. The modifier "about" used in connection with a quantity is inclusive of the stated value and has the meaning dictated by the context (e.g., it includes the degree of error associated with measurement of the particular quantity). All ranges disclosed herein are inclusive of the endpoints, and the endpoints are independently combinable with each other. It should be appreciated that relative positional terms such as "forward," "aft," "upper," "lower," "above," "below," and the like are with reference to the normal operational attitude of the vehicle and should not be considered otherwise limiting.

Although the different non-limiting embodiments have specific illustrated components, the embodiments of this invention are not limited to those particular combinations. It is possible to use some of the components or features from any of the non-limiting embodiments in combination with features or components from any of the other non-limiting embodiments.

It should be appreciated that like reference numerals identify corresponding or similar elements throughout the several drawings. It should also be appreciated that although a particular component arrangement is disclosed in the illustrated embodiment, other arrangements will benefit herefrom.

## Claims

1. A wall assembly for use in a combustor (56) of a gas turbine engine (20), the wall assembly comprising:
a support shell (68; 70) with a first inner periphery (120) along an axis (D); and
a liner panel (72; 74) with a second inner periphery (122) along said axis (D);
wherein said first inner periphery (120) and said second inner periphery (122) define a dilution passage (116C) comprising an inner wall (126);
**characterised in that**:
said second inner periphery (122) including a spiral flow guide (150) around said axis (D); and
said second inner periphery (122) is smaller than said first inner periphery (120) such that said inner wall (126) defines a convex surface around said axis (D) or a funnel type shape,
and said spiral flow guide (150) comprises a raised ridge that spirals around said axis (D).

2. The wall assembly as recited in claim 1, wherein said first inner periphery (120) and said second inner periphery (122) each has an oval cross-section.

3. The wall assembly as recited in claim 1 or 2, wherein said first inner periphery (120) and/or said second inner periphery (122) has a circular cross-section.

4. The wall assembly as recited in any preceding claim, wherein said spiral flow guide (150) extends from said second inner periphery (122).

5. The wall assembly as recited in claim 4, wherein said spiral flow guide (150) extends from said second inner periphery (122) and at least partially around said axis (D).

6. A method of reducing recirculation into a dilution passage (116) in a gas turbine engine combustor wall assembly (60; 62), the wall assembly (60; 62) comprising a liner panel (72; 74) and a support shell (68; 70), the support shell (68; 70) having a first inner periphery (120) along an axis (D), and the liner panel (72; 74) having a second inner periphery (122) along said axis (D), the method further comprising:
contouring a dilution passage (116C) formed by the first inner periphery (120) and the second inner periphery (122) to match a natural vena contracta of a fluid flowing therethrough, wherein the second inner periphery (122) is smaller than the first inner periphery (120) such that an inner wall (126) of the dilution passage (116C) defines a convex surface around said axis (D) or a funnel type shape; and
defining a spiral flow guide (150) within the second inner periphery (122) of the dilution passage (116C), wherein said spiral flow guide (150) comprises a raised ridge that spirals around said axis (D).

7. The method as recited in claim 6, further comprising swirling the dilution air jet to hug the inner wall (126C) of the dilution passage (116).

## Patentansprüche

1. Wandbaugruppe zur Verwendung in einer Brennkammer (56) eines Gasturbinenmotors (20), wobei die Wandbaugruppe Folgendes umfasst:
eine Stützhülle (68; 70) mit einem ersten Innenumfang (120) entlang einer Achse (D); und
eine Innenverkleidung (72; 74) mit einem zweiten Innenumfang (122) entlang der Achse (D);
wobei der erste Innenumfang (120) und der zweite Innenumfang (122) eine Verdünnungspassage (116C) definieren, die eine Innenwand (126) umfasst;
**dadurch gekennzeichnet, dass**:
der zweite Innenumfang (122) eine spiralförmige Strömungsführung (150) um die Achse (D) beinhaltet; und
der zweite Innenumfang (122) kleiner als der erste Innenumfang (120) ist, sodass die Innenwand (126) eine konvexe Fläche um die Achse (D) oder eine trichterartige Form definiert,
und die spiralförmige Strömungsführung (150) eine erhöhte Rippe umfasst, die sich spiralförmig um die Achse (D) erstreckt.

2. Wandbaugruppe nach Anspruch 1, wobei der erste Innenumfang (120) und der zweite Innenumfang (122) jeweils einen ovalen Querschnitt aufweisen.

3. Wandbaugruppe nach Anspruch 1 oder 2, wobei der erste Innenumfang (120) und/oder der zweite Innenumfang (122) einen kreisförmigen Querschnitt aufweisen.

4. Wandbaugruppe nach einem der vorhergehenden Ansprüche, wobei sich die spiralförmige Strömungsführung (150) von dem zweiten Innenumfang (122) weg erstreckt.

5. Wandbaugruppe nach Anspruch 4, wobei sich die spiralförmige Strömungsführung (150) von dem zweiten Innenumfang (122) weg und zumindest teilweise um die Achse (D) erstreckt.

6. Verfahren zum Reduzieren der Rückführung in eine Verdünnungspassage (116) in einer Brennkammerwandbaugruppe (60; 62) eines Gasturbinenmotors, wobei die Wandbaugruppe (60; 62) eine Innenverkleidung (72; 74) und eine Stützhülle (68; 70) umfasst, wobei die Stützhülle (68; 70) einen ersten Innenumfang (120) entlang einer Achse (D), aufweist und die Innenverkleidung (72; 74) einen zweiten Innenumfang (122) entlang der Achse (D) aufweist, wobei das Verfahren außerdem Folgendes umfasst:
Konturieren einer durch den ersten Innenumfang (120) und den zweiten Innenumfang (122) ausgebildeten Verdünnungspassage (116C) derart, dass sie einer natürlichen Vena contracta eines sie durchströmenden Fluids entspricht, wobei der zweite Innenumfang (122) kleiner als der erste Innenumfang (120) ist, sodass eine Innenwand (126) der Verdünnungspassage (116C) eine konvexe Fläche um die Achse (D) oder eine trichterartige Form definiert; und
Definieren einer spiralförmigen Strömungsführung (150) innerhalb des zweiten Innenumfangs (122) der Verdünnungspassage (116C), wobei die spiralförmige Strömungsführung (150) eine erhöhte Rippe umfasst, die sich spiralförmig um die Achse (D) erstreckt.

7. Verfahren nach Anspruch 6, ferner umfassend ein Verwirbeln des Verdünnungsluftstrahls derart, dass er eng an der Innenwand (126C) der Verdünnungspassage (116) anliegt.

## Revendications

1. Ensemble paroi destiné à être utilisé dans une chambre de combustion (56) d'un moteur à turbine à gaz (20), l'ensemble paroi comprenant :
une enveloppe de support (68 ; 70) présentant une première périphérie interne (120) le long d'un axe (D) ; et
un panneau de revêtement (72 ; 74) présentant une seconde périphérie interne (122) le long dudit axe (D) ;
dans lequel ladite première périphérie interne (120) et ladite seconde périphérie interne (122) définissent un passage de dilution (116C) comprenant une paroi interne (126) ;
**caractérisé en ce que** :
ladite seconde périphérie interne (122) incluant un guide d'écoulement en spirale (150) autour dudit axe (D) ; et
ladite seconde périphérie interne (122) est plus petite que ladite première périphérie interne (120) de sorte que ladite paroi interne (126) définit une surface convexe autour dudit axe (D) ou une forme de type entonnoir,
et ledit guide d'écoulement en spirale (150) comprend une nervure qui tourne en spirale autour dudit axe (D).

2. Ensemble paroi selon la revendication 1, dans lequel ladite première périphérie interne (120) et ladite seconde périphérie interne (122) présentent chacune une section transversale ovale.

3. Ensemble paroi selon la revendication 1 ou 2, dans lequel ladite première périphérie interne (120) et/ou ladite seconde périphérie interne (122) présente une section transversale circulaire.

4. Ensemble paroi selon une quelconque revendication précédente, dans lequel ledit guide d'écoulement en spirale (150) s'étend depuis ladite seconde périphérie interne (122).

5. Ensemble paroi selon la revendication 4, dans lequel ledit guide d'écoulement en spirale (150) s'étend depuis ladite seconde périphérie interne (122) et au moins partiellement autour dudit axe (D).

6. Procédé de réduction de la recirculation dans un passage de dilution (116) dans un ensemble paroi (60 ; 62) de chambre de combustion d'un moteur à turbine à gaz, la chambre de combustion (60 ; 62) comprenant un panneau de revêtement (72 ; 74) et une enveloppe de support (68 ; 70), l'enveloppe de support (68 ; 70) présentant une première périphérie interne (120) le long de un axe (D), et le panneau de revêtement (72 ; 74) présentant une seconde périphérie interne (122) le long dudit axe (D), le procédé comprenant en outre :
le contournage d'un passage de dilution (116C) formé par la première périphérie interne (120) et la seconde périphérie interne (122) pour correspondre à une section contractée naturelle d'un fluide s'écoulant à travers celui-ci, dans lequel la seconde périphérie interne (122) est plus petite que la première périphérie interne (120) de sorte qu'une paroi interne (126) du passage de dilution (116C) définit une surface convexe autour dudit axe (D) ou une forme de type entonnoir ; et
définissant un guide d'écoulement en spirale (150) dans la seconde périphérie interne (122) du passage de dilution (116C), dans lequel ledit guide d'écoulement en spirale (150) comprend une nervure qui tourne en spirale autour dudit axe (D) .

7. Procédé selon la revendication 6, comprenant en outre le tourbillonnement du jet d'air de dilution pour suivre la paroi interne (126C) du passage de dilution (116).
